(19) Europäisches Patentamt

European Patent Office

Office européen des brevets

(11) **EP 1 051 857 B1**

(12) **EUROPEAN PATENT SPECIFICATION**

(45) Date of publication and mention
of the grant of the patent:
**06.08.2003 Bulletin 2003/32**

(51) Int Cl.⁷: **H04N 9/31**, G03B 21/62,
G02B 5/32

(21) Application number: **98904725.3**

(22) Date of filing: **29.01.1998**

(86) International application number:
**PCT/US98/01618**

(87) International publication number:
**WO 99/039510 (05.08.1999 Gazette 1999/31)**

(54) **PROJECTION TELEVISIONS WITH HOLOGRAPHIC SCREENS HAVING STACKED ELEMENTS**

PROJEKTIONSFERNSEHGERÄTE MIT HOLOGRAPHISCHEN BILDSCHIRMEN UND
AUFEINANDERGESTAPELTEN ELEMENTEN

TELEVISEUR A PROJECTION A ECRAN HOLOGRAPHIQUE DOTE D'ELEMENTS EMPILES

(84) Designated Contracting States:
**DE FR GB IT**

(43) Date of publication of application:
**15.11.2000 Bulletin 2000/46**

(73) Proprietor: **Thomson Licensing S.A.**
**92648 Boulogne Cedex (FR)**

(72) Inventors:
 • **HALL, Estill, Thone, Jr.**
 **Fishers, IN 46038 (US)**
 • **PFILE, Wendy, Rene**
 **Indianapolis, IN 46226 (US)**

(74) Representative: **Ruellan-Lemonnier, Brigitte**
**THOMSON multimedia,**
**46 quai A. Le Gallo**
**92648 Boulogne Cédex (FR)**

(56) References cited:
**EP-A- 0 671 653**      **EP-A- 0 751 419**
**WO-A-95/04303**      **WO-A-95/34832**
**WO-A-96/07953**      **WO-A-97/10523**
**US-A- 5 046 793**      **US-A- 5 796 499**

 • **PATENT ABSTRACTS OF JAPAN vol. 97, no. 7,**
 **31 July 1997 & JP 09 073132 A (CASIO**
 **COMPUTER LTD), 18 March 1997**
 • **PATENT ABSTRACTS OF JAPAN vol. 18, no. 333**
 **(P-1759), 23 June 1994 & JP 06 082625 A (RICOH**
 **CO LTD)**

## Description

## BACKGROUND

### Field of the Invention

This invention relates generally to the field of projection television receivers, and in particular to projection television receivers having screens providing significantly reduced color shift and/or significantly reduced cabinet depth.

### Background Information

Color shift is defined as the change in the red/blue or green/blue ratio of a white image formed at the center of a projection screen by projected images from red, green and blue projection tubes, when viewed at different angles in the horizontal plane, by observations made at the peak brightness vertical viewing angle.

The color shift problem is caused by the need for at least three image projectors for respective images of different colors, for example, red, blue and green. A projection screen receives images from the at least three projectors on a first side and displays the images on a second side with controlled light dispersion of all the displayed images. One of the projectors, usually green and usually in the center of an array of projectors, has a first optical path in a substantially orthogonal orientation with the screen. At least two of the projectors, usually red and blue and usually positioned on opposite sides of the central green projector in the array, have respective optical paths converging toward the first optical path in a non orthogonal orientation defining angles of incidence. Color shift results from the non orthogonal relationship of the red and blue projectors, relative to the screen and to the green projector. As a result of the color shift, color tones may differ at every position on the screen. The condition in which the color tone difference is large is often referred to as poor white uniformity. The smaller the color shift, the better the white uniformity.

Color shift is denoted by a scale of numbers, in which lower numbers indicate less color shift and better white uniformity. In accordance with a common procedure, values for the red, green and blue luminance are measured at the screen center from a variety of horizontal viewing angles, typically from at least about -40° to +40°, to as much as about -60° to +60°, in 5° or 10° increments. The positive and negative angles represent horizontal viewing angles to the right and left of screen center, respectively. These measurements are taken at the peak vertical viewing angle. The red, green and blue data is normalized to unity at 0°. One or both of the following equations (I) and (II) are evaluated at each angle:

$$C(\Theta) = 20 \cdot \log_{10}\left(\frac{red(\Theta)}{blue(\Theta)}\right); \qquad \text{(I)}$$

$$C(\Theta) = 20 \cdot \log_{10}\left(\frac{green(\Theta)}{blue(\Theta)}\right) \qquad \text{(II)}$$

where θ is any angle within a range horizontal viewing angles, C(θ) is the color shift at angle θ, red(θ) is the red luminance level at angle θ, blue(θ) is the blue luminance level at angle θ and green(θ) is the green luminance level at angle θ. The maximum of these values is the color shift of the screen.

In general, color shift-should be no larger than 5, nominally, on any commercially acceptable screen design. Other engineering and design constraints may sometimes require that the color shift be somewhat higher than 5, although such color shift performance is not desirable and usually results in a perceptibly inferior picture with poor white uniformity.

Screens for projection television receivers are generally manufactured by an extrusion process utilizing one or more patterned rollers to shape the surface of a thermoplastic sheet material. The configuration is generally an array of lenticular elements, also referred to as lenticules and lenslets. The lenticular elements may be formed on one or both sides of the same sheet material or on one side only of different sheets which can then be permanently combined as a laminated unit or otherwise mounted adjacent to one another so as to function as a laminated unit. In many designs, one of the surfaces of the screen is configured as a Fresnel lens to provide light diffusion. Prior art efforts to reduce color shift and improve white uniformity have focused exclusively on two aspects of the screen. One aspect is the shape and disposition of the lenticular elements. The other aspect is the extent to which the screen material, or portions thereof, are doped with light diffusing particles to control light diffusion. These efforts are exemplified by the following patent documents.

In US 4,432,010 and US 4,536,056, a projection screen includes a light-transmitting lenticular sheet having an input surface and an exit surface. The input surface is characterized by horizontally diffusing lenticular profiles having a ratio of a lenticulated depth Xv to a close-axis-curvature radius R1 (Xv/Rl) which is within the range of 0.5 to 1.8. The profiles are elongated along the optical axis and form aspherical input lenticular lenses.

The use of a screen with a double sided lenticular lens is common. Such a screen has cylindrical entrance lenticular elements on an entrance surface of the screen, cylindrical lenticular elements formed on an exit surface of the screen and a light absorbing layer formed at the light non convergent part of the exit surface. The entrance and the exit lenticular elements each have the shape of a circle, ellipse or hyperbola represented by the following equation (III):

$$Z(x) = \frac{Cx^2}{1 + [1 - (K + 1)C^2x^2]^{\frac{1}{2}}} \qquad (III)$$

wherein C is a main curvature and K is a conic constant.

Alternatively, the lenslets have a curve to which a term with a higher order than 2nd order has been added.

In screens making use of such a double sided lenticular lens, it has been proposed to specify the position relationship between the entrance lens and exit lens, or the lenticular elements forming the lenses. It has been taught, for example in US 4,443,814, to position the entrance lens and exit lens in such a way that the lens surface of one lens is present at the focal point of the other lens. It has also been taught, for example in JP 58-59436, that the eccentricity of the entrance lens be substantially equal to a reciprocal of the refractive index of the material constituting the lenticular lens. It has further been taught, for example in US 4,502,755, to combine two sheets of double-sided lenticular lenses in such a way that the optic axis planes of the respective lenticular lenses are at right angles with respect to one another, and to form such double sided lenticular lenses in such a way that the entrance lens and exit lens at the periphery of one of the lenses are asymmetric with respect to the optic axis. It is also taught, in US 4,953,948, that the position of light convergence only at the valley of an entrance lens should be offset toward the viewing side from the surface of an exit lens so that the tolerance for misalignment of optic axes and the difference in thickness can be made larger or the color shift can be made smaller.

In addition to the various proposals for decreasing the color shift or white non uniformity, other proposals for improving projection screen performance are directed to brightening pictures and ensuring appropriate visual fields in both the horizontal and vertical directions. A summary of many such proposals can be found in US 5,196,960, which itself teaches a double sided lenticular lens sheet comprising an entrance lens layer having an entrance lens, and an exit lens layer having an exit lens whose lens surface is formed at the light convergent point of the entrance lens, or in the vicinity thereof, wherein the entrance lens layer and the exit lens layer are each formed of a substantially transparent thermoplastic resin and at least the exit layer contains light diffusing fine particles and wherein a difference exists in the light diffusion properties between the entrance lens layer and the exit lens layer. A plurality of entrance lenses comprise a cylindrical lens. The exit lens is formed of a plurality of exit lens layers, each having a lens surface at the light convergent point of each lens of the entrance lens layer, or in the vicinity thereof. A light absorbing layer is also formed at the light non convergent part of the exit lens layer. This screen design is said to provide sufficient horizontal visual field angle, decreased color shift and a brighter picture, as well as ease of manufacture by extrusion processes.

Despite many years of aggressive developments in projection screen design, the improvements have been incremental, at best. Moreover, there has been no success in surpassing certain benchmarks. The angle of incidence defined by the geometric arrangement of the image projectors, referred to as angle $\alpha$ herein, has generally been limited to the range of greater than 0° and less than or equal to about 10° or 11°. The size of the image projectors and/or their optics, makes angles of $\alpha$ close to 0° essentially impossible. In the range of the angles of $\alpha$ less than about 10° or 11°, the best color shift performance which has been achieved is about 5, as determined in accordance with equations (I) and (II). In the range of the angles of a greater than about 10° or 11°, the best color shift performance which has been achieved is not commercially acceptable. In fact, projection television receivers having angles of $\alpha$ greater than 10° or 11° are not known to have been marketed.

Small angles of $\alpha$ have a significant and undesirable consequence, namely a very large cabinet depth is needed to house a projection television receiver. The large depth is a direct result of the need to accommodate optical paths having small angles of incidence ($\alpha$). For a given size of the image projectors and optical elements, the angle of incidence can be reduced only by increasing the length of the optical path between the image projectors or their optics and the screen. Techniques for reducing the size of projection television cabinets generally rely on mirrors for folding long optical paths. The color shift success of such efforts is ultimately limited because there is a low limit to the range of possible angles of incidence.

Polaroid Corporation sells a photo polymer designated DMP-128®, which Polaroid Corporation can manufacture as a three dimensional hologram, using proprietary processes. The holographic manufacturing process is described, in part, in US 5,576,853. Holographic photo polymers are generally useful for recording photographic images by splitting coherent light into an illumination beam and a reference beam. The illumination beam irradiates the subject. The reflected beam from the subject and the reference beam, which bypasses the subject, irradiate the photo polymer medium, which contains a developable light sensitive photographic composition. The light waves of the two beams interfere, that is, by constructive and destructive interference they produce a standing wave pattern of sinusoidal peaks which locally expose the photographic composition, and nulls which do not locally expose the composition. When the photographic medium is developed, a corresponding interference pattern is recorded in the medium. By illuminating the medium with a coherent reference beam, the image of the subject is reproduced and can be viewed over a range of apparent angles.

The recorded interference pattern of a hologram representing a typical photographic subject is complex because light from all the illuminated points on the subject interfere with the reference beam at all points on the hologram. It would be possible by recording the image of a blank "subject" (effectively by interfering two reference beams), to make a blank hologram in which the interference pattern is more regular. In that case the interference pattern would resemble a diffraction grating but the pitch or resolution of the diffraction grating would be quite fine compared to the pitch of a projection screen having macro sized lenticular elements shaped to bend or refract light in a particular direction from rearward projection tubes.

A three dimensional holographic screen for a projection television was proposed by Polaroid Corporation, as one of many suggestions made during efforts to establish a market for the DMP-128® photo polymer holographic product. The proposal was based on advantages which Polaroid Corporation expected in terms of higher brightness and resolution, lower manufacturing cost, lower weight, and resistance to the abrasion to which two-piece screens are subjected during shipping. Polaroid Corporation never proposed any particular holographic configuration for the volume holographic elements which might make up such a holographic projection television screen, and never even considered the problem of color shift in projection television screens of any type, holographic or otherwise.

Overall, despite years of intensive development to provide a projection television receiver having a screen with a color shift less than 5, even significantly less than 5, or having a color shift as low as 5 for angles of α even greater than 10° or 11°, there have been no advances in solving the color shift problem other than incremental changes in the shapes and positions of lenticular elements and diffusers in conventional projection screens. Moreover, despite suggestions that three dimensional holograms might be useful for projection screens, although for reasons having nothing to do with color shift, there has been no effort to provide projection televisions with three dimensional holographic screens. A long felt need for a projection television receiver having significantly improved color shift performance, which can also be built into a significantly smaller cabinet, has remained unsatisfied.

Fig.2 of JP 09-073132 discloses a projection television comprising three image projectors 1, 2, 3 for projecting images of different colors onto a holographic projection screen 20 comprising three stacked holograms 22, 23, 24, each for one primary color.

Page 7 of WO95/34832 discloses trichromatic projection screens (line 13) :

- 1st embodiment : a three-dimensionnal projection screen comprising only one three-dimensionnal hologram : see line 18 :"to make this screen, three chromatic functions are registered in the same photosensitive layer";

- 2nd embodiment : a projection screen comprising three stacked holograms as in Fig.2 of JP 09-073132, each of them managing only one primary color : see line 27-36.

## SUMMARY

A projection television according to the invention is set out in claim 1.

A projection television receiver in accordance with the inventive arrangements taught herein provides such a significant improvement in color shift performance, measured in orders of magnitude, that a color shift of 2 or less can be achieved with projection television receivers having angles of incidence α in the range of less than 10° or 11°. Moreover, the color shift performance is so significant that commercially acceptable projection television receivers having angles of incidence up to about 30° can be provided, in much smaller cabinets. The color shift performance of such large α angle receivers is at least as good as conventional small α angle receivers, for example having a color shift of 5, and can be expected to approach or even reach values as low as about 2, as in the small α angle receivers.

These results are achieved by forsaking the extruded lens screen technology altogether. Instead, α projection television receiver in accordance with an inventive arrangement has a screen formed by a three dimensional hologram formed on a substrate, for example, a polyethylene film, such as Mylar®.

Such a three dimensional holographic screen was originally developed for its expected advantages in terms of higher brightness and resolution, and lower manufacturing cost, lower weight and resistance to abrasion to which two-piece screens are subjected, for example during shipping. The discovery of the color shift performance of the three dimensional holographic screen came about when testing to determine if the optical properties of the three dimensional screen would be at least as good as a conventional screen. The color shift performance of the three dimensional holographic screen, as measured by equations (I) and (II), was so unexpectedly low as to be shocking. The barriers which limited prior art improvements to incremental steps had been eliminated altogether. Moreover, smaller cabinets with projection geometry characterized by larger α angles of incidence can now be developed.

A projection television having the unexpected properties associated with three dimensional holographic screens, and in accordance with the inventive arrangements taught herein, comprises: at least three image projectors for respective images of different colors; a projection screen formed by a three dimensional hologram disposed on a substrate, the screen receiving images from the projectors on a first side and displaying the images on a second side with controlled light dispersion of all the displayed images; one of the projectors having a first optical path in a substantially orthogonal orientation with the screen and at least two of the projectors having respective optical paths converging toward the first optical path in a non orthogonal orientation defining angles of incidence; and. the three dimensional hologram representing a three dimensional interference array or diffraction pattern having a configuration effective for reducing color shift in the displayed images, the screen having a color shift less than or equal to approximately 5 for all the angles of incidence in a range greater than 0° and less than or equal to approximately 30°, as determined by the maximum value obtained from at least one of the following expressions:

$$C(\Theta) = 20 \cdot \log_{10}\left(\frac{red(\Theta)}{blue(\Theta)}\right); \qquad (I)$$

$$C(\Theta) = 20 \cdot \log_{10}\left(\frac{green(\Theta)}{blue(\Theta)}\right) \qquad (II)$$

where θ is any angle within a range horizontal viewing angles, C(θ) is the color shift at angle θ, red(θ) is the red luminance level at angle θ, blue(θ) is the blue luminance level at angle θ and green(θ) is the green luminance level at angle θ. The color shift of the screen can be expected to be less than 5, for example, less than or equal to approximately 4, 3 or even 2.

In terms of the known barrier at an angle of incidence of about 10° or 11°, the color shift of the screen is less than or equal to approximately 2 for all the angles of incidence in a first subrange of angles of incidence greater than 0° and less than or equal to approximately 10°; and, the color shift of the screen is less than or equal to approximately 5 for all the angles of incidence in a second subrange of angles of incidence greater than approximately 10° and less than or equal to approximately 30°.

The screen further comprises a light transmissive reinforcing member, for example, of an acrylic material in a layer having a thickness in the range of approximately 2 - 4 mm. The substrate comprises a highly durable, transparent, water-repellent film, such as a polyethylene terephthalate resin film. The substrate can be a film having a thickness in the range of about 1 - 10 mils. A thickness of about 7 mils has been found to provide adequate support for the three dimensional hologram. The thickness of the film is not related to performance. The three dimensional hologram has a thickness in the range of not more than approximately 20 microns. The projection television may further comprise one or more mirrors between the image projectors and the screen.

According to an inventive aspect, the color shift performance of the projection screen is further improved by stacking a plurality of holographic screen elements and/or collimating elements. For example, a holographic screen can be backed by vertical and horizontal linear Fresnel lenses for achieving a desired variation in light transmission properties across a span of vertical or horizontal viewing angles. In addition, a plurality of holographic screen elements having a variation in light transmission properties across a span of viewing angles are stacked. According to a practical embodiment, at least two holographic elements are stacked, one providing a predetermined variation across a vertical span And the other providing a predetermined variation across a horizontal span. In this manner, the brightness of the image across the range of useful viewing angles can be adjusted and optimized to take full advantage of the available illumination. In addition, stacking an holographic elements and/or collimating elements can accommodate a variety of performance domains at a favor cost, because linearly varying elements can be manufactured at a lower cost than circularly varying elements. For example, linearly varying fresnel elements can be embossed or roller extruded, at a cost as low as 25% of the cost of a circular fresnel. Similarly, a linear varying holographic master is less complicated and less expensive than a circular one defining variations in two dimensions.

## BRIEF DESCRIPTION OF THE DRAWINGS

FIGURE 1 is a diagrammatic representation of a projection television in accordance with the inventive arrangements taught herein.
FIGURE 2 is a simplified diagram of projection television geometry useful for explaining the inventive arrangements.
FIGURE 3 is a side elevation of a reinforced projection screen according to the inventive arrangements.
FIGURE 4 is a schematic representation of an alternative embodiment of a projection screen with two superimposed holograms containing gain variations across horizontal and vertical viewing angles, respectively.
FIGURE 5 is a graphic representation of the proportion of peak white brightness as a function of horizontal viewing angle, using a horizontally varied holographic element with and without the stacked vertically varying holographic element.

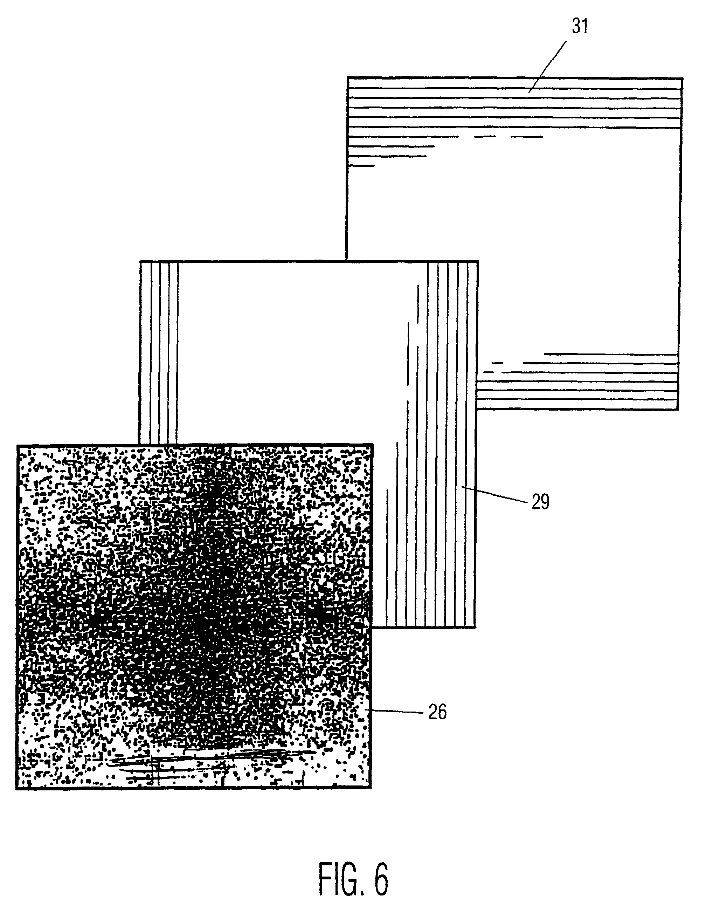

FIGURE 6 is a schematic drawing of an alternative embodiment having stacked holographic and collimating screen layers.

## DESCRIPTION OF THE PREFERRED EMBODIMENTS

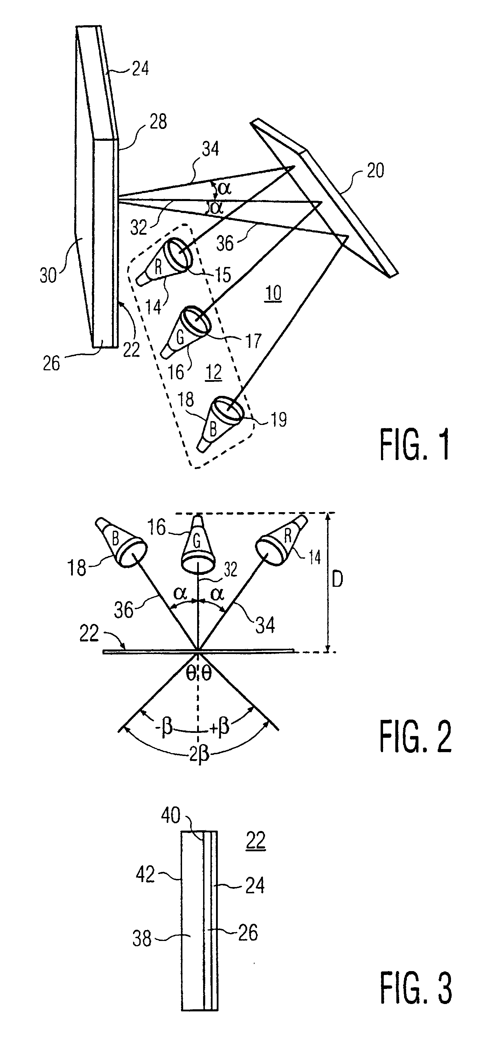

A projection television receiver 10 is illustrated diagrammatically in FIGURE 1. An array 12 of projection cathode ray tubes 14, 16 and 18 provide red, green and blue images respectively. The cathode ray tubes are provided with respective lenses 15, 17 and 19. The projected images are reflected by a mirror 20 onto a projection screen 22. Additional mirrors can also be utilized, depending on the particular geometry of the optical paths. The green cathode ray tube 16 projects the green image along an optical path 32, which in this example is oriented substantially orthogonal to screen 22. In other words, the centerline of the optical path is at right angles to the screen. The red and blue cathode ray tubes have respective optical paths 34 and 36, which converge toward the first optical path 32 in a non orthogonal orientation defining angles of incidence α. The angles of incidence introduce the problem of color shift.

The screen 22 comprises a three dimensional hologram 26 disposed on a substrate 24. Hologram 26 is a print of a master hologram substantially forming a diffraction pattern that manages the distribution of light energy from the three projectors 14, 16, 18, and can be made variable across the width and/or height of the screen. In a preferred arrangement, the hologram is a "center only" hologram that tends to reorient incident light. The screen receives images from the projectors on a first, entrance surface side 28 and displays the images on a second, exit surface side 30, with controlled light dispersion of all the displayed images. The substrate is preferably a highly durable, transparent, water-repellent film, such as a polyethylene terephthalate resin film. One such film is available from E I. du Pont de Nemours & Co. under the trademark Mylar®. The film substrate has a thickness in the range of about 1 - 10 mils, equivalent to about 0.001 - 0.01 inches or about 25.4 - 254 microns. A film having a thickness of about 7 mils has been found to provide adequate support for the three dimensional hologram disposed thereon. The thickness of the film does not affect screen performance in general or color shift performance in particular, and films of different thickness may be utilized. The three dimensional hologram 26 has a thickness of not more than approximately 20 microns.

Three dimensional holographic screens are available from at least two sources. Polaroid Corporation utilizes a proprietary, wet chemical process to form three dimensional holograms in its DMP-128 photo polymer material. The process includes forming a diffractive holographic pattern in the photo polymer material, which pattern can include variations in screen gain across the range of horizontal and/or vertical viewing angles. A master hologram can be prepared by exposing photo polymer holographic media to coherent light including a reference beam and a beam reflected from a planar pattern having light-to-dark variations corresponding to the desired variation in gain.

A preferred embodiment of the three dimensional holographic screens used in the projection television receivers described and claimed herein were manufactured by the Polaroid Corporation wet chemical process, in accordance with the following performance specifications:

Horizontal half viewing angle: 38° ± 3°,
Vertical half viewing angle: 10° ± 1°,
Screen gain: ≥ 8,
Color shift: ≤ 3,

where the horizontal and vertical viewing angles are measured conventionally, screen gain is the quotient of light intensity directed from the source toward the rear of the viewing surface, and light intensity from the front of the viewing surface toward the viewer, measured orthogonal to the screen, and color shift is measured as described above. The extraordinary color shift performance of the three dimensional holographic projection screen was, as explained in the Summary, wholly unexpected.

FIGURE 2 is a simplified projection television diagram, omitting the mirror and lenses, for explaining color shift performance. The optical axes 34 and 36 of the red and blue cathode ray tubes 14 and 18 are aligned symmetrically at angles of incidence α with respect to the optical axis 32 of the green cathode ray tube 16. The minimum depth D of a cabinet is determined by the distance between the screen 22 and the rear edges of the cathode ray tubes. It will be appreciated that if the angle α is to become smaller, the cathode tubes must be placed closer together and/or must be spaced further from the screen to provide clearance for the tubes. At a sufficiently small angle α, such interference cannot be avoided. This undesirably increases the minimum depth D of a cabinet. Conversely, as the angle α gets larger, the cathode ray tubes can be moved closer to the screen 22, reducing the minimum depth D of a cabinet.

On the viewing side of the screen 22, two horizontal half viewing angles are designated -β and +β. Together, a total horizontal viewing angle of 2β is defined. The half viewing angles may typically range from ± 40° to ± 60°. Within each half angle are a plurality of specific angles θ, at which color shift can be measured and determined, in accordance with equations (I) and (II) explained above.

In terms of the known barrier at an angle of incidence of about 10° or 11°, the color shift of the three dimensional holographic screen is less than or equal to approximately 2 for all the angles of incidence in a first subrange of angles of incidence greater than 0° and less than or equal to approximately 10°; and, the color shift of the screen is less than or equal to approximately 5 for all the angles of incidence in a second subrange of angles of incidence greater than approximately 10° and less than or equal to approximately 30°. It is expected that a color shift of less than or equal to approximately 2, as in the first subrange, can also be achieved in the second subrange of larger angles of incidence.

With reference to FIGURE 3, the substrate 24 comprises a transparent film, such as Mylar®, as described above. The photo polymer material from which the three dimensional hologram 26 is formed is supported on the film layer 24. A suitable photo polymer material is DMP-128®.

The screen 22 may further comprise a light transmissive reinforcing member 38, for example, of an acrylic material, such as polymethylmethacrylate (PMMA). Polycarbonate materials can also be used. The reinforcing member 38 is presently a layer having a thickness in the range of approximately 2 - 4 mm. The screen 22 and the reinforcing member are adhered to one another throughout the mutual boundary 40 of the holographic layer 26 and the reinforcing member 38. Adhesive, radiation and/or thermal bonding techniques may be utilized. The surface 42 of the reinforcing layer may also be treated, for example by one or more of the following: tinting, anti-glare coatings and anti-scratch coatings.

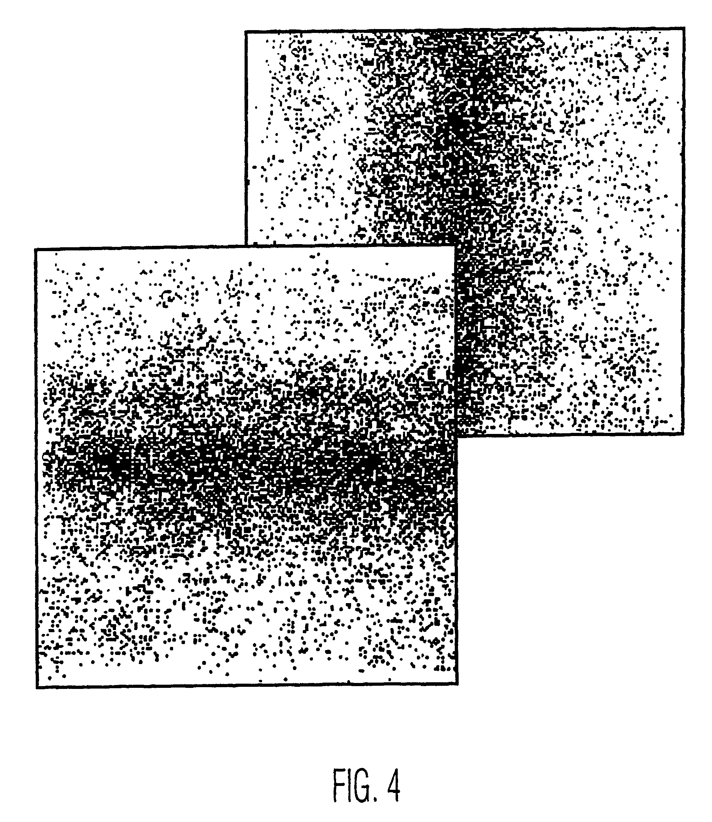

Various surfaces of the screen and/or its constituent layers may be provided with other optical lenses or lenticular arrays to control aspects of the projection screen bearing on performance characteristics other than color shift performance, as is known to do with conventional projection screens, without impairing the improved color shift performance of the three dimensional holographic projection screen. FIGURE 4 illustrates a first such variation wherein at least two holograms are superimposed or stacked. According to the example shown, a first hologram having a horizontal gain variation across a viewing field of ± 40° is stacked with a second hologram having a vertical gain variation across a field of ± 20°. The gain variations are suggested by shading in the drawing, but when not illuminated the actual holographic elements simply appear to be diffuse across their surfaces. The result of superimposing horizontal and vertical gain variation holograms is substantially equivalent to a center-only hologram; however, the brightness level is varied at different rates across the horizontal span and the vertical span, because the horizontal span is substantially larger than the vertical span.

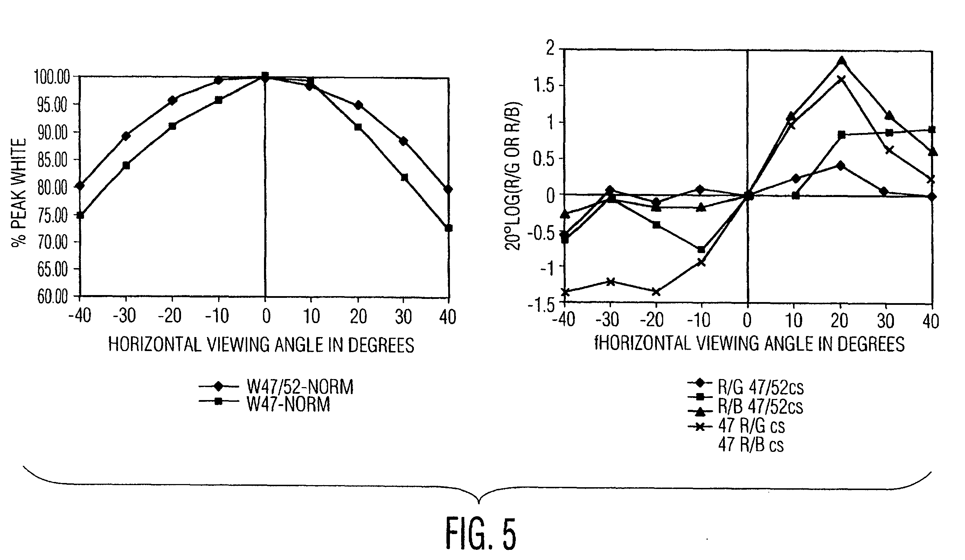

FIGURE 5 is a graph of measured screen brightness as a percentage of peak white brightness through a horizontal viewing span of ±40°, at a point in the center of the screen. The two lines on the graph represent the brightness using only a horizontally varying hologram and brightness using stacked horizontally and vertically varying holograms. The horizontal brightness variation with stacked holograms is substantially equal or slightly improved over the performance of the horizontal hologram alone.

In designing a holographic screen for a variety of performance domains, it can be difficult to make a screen that implements all desired performance characteristics at once. Stacking allows the separate handling of different demands, such as vertical and horizontal variations in gain, the requirements for which may be different, for example due to the aspect ratio of the screen (i.e., wider than tall), or a need for an offset on one axis (e.g., vertical) while remaining centered on the other. This arrangement is not limited to two stacked holograms having linear, but is also applicable to additional stacked holograms, for example to control chromatic aberration or other aspects of light transmission through the screen, or to stacking with elements that improve edge brightness, color shift performance and the like.

Linear fresnels can be embossed or roller extruded inexpensively as compared with a circular fresnel. A circular fresnel can account for as much as 60% of the cost of a conventional screen. A linear fresnel costs about 25% of the cost of a circular one. Therefore, a 30% cost savings is possible (i.e., (25%+25%)*60% = 30%). As with the horizontal and rotated holograms as discussed above, the linear fresnels can be varied across the horizontal and/or vertical viewing span as necessary, for example to vary the focal lengths independently in the vertical and horizontal spans. The two stacked linear fresnels can be placed in either order behind the holographic element.

**Claims**

1. A projection television, comprising:

   a plurality of image projectors (14, 16, 18) for respective images in green, red and blue colors;
   a projection screen (22) formed by first and second stacked three-dimensional holograms (26) disposed on a substrate (24) superimposed on at least one light transmissive panel (38), said screen receiving images from said projectors on a first side and displaying said images on a second side with controlled light dispersion of all of said displayed images;
   said two stacked holograms having a linear variation in light transmission properties across a span of viewing angles, the first one providing a predetermined variation across a vertical span and the second one providing a predetermined variation across a horizontal span,
   at least one of said projectors (14, 16, 18) being oriented along an optical path converging with a path orthogonal to said screen, defining at least one angle of incidence ($\alpha$);
   said screen forming an interference array with optical properties varying horizontally and vertically across a field of view, the screen having a color shift (C) less than or equal to approximately five for all said angles of incidence ($\alpha$) in a range greater than 0° and less than or equal to approximately 30°, as determined by the maximum value obtained from at least one of the following expressions:

$$C(\theta) = 20 \cdot \log_{10}\left(\frac{red(\theta)}{blue(\theta)}\right)$$

$$C(\theta) = 20 \cdot \log_{10}(\frac{green(\theta)}{blue(\theta)}),$$

where θ is any angle within a range (±β) of horizontal viewing angles, C(θ) is the color shift at angle θ, red(θ) is the red luminance level at angle θ, blue (θ) is the blue luminance level at angle θ and green(θ) is the green luminance level at angle θ.

2. The projection screen of claim 1, wherein said screen (22) further comprises a first Fresnel element (29 or 31) superimposed on said first hologram, said first Fresnel element having a collimating effect in at least one of said spans of viewing angles.

3. The projection screen of claim 2, wherein said screen further comprises a second Fresnel element (29 or 31) stacked on said first Fresnel element, said first Fresnel element having a collimating effect in one of said span of viewing angles and said second Fresnel element having a collimating effect in the other of said span of viewing angles, said collimating effects of said first and second Fresnel elements being superimposed.

4. The projection screen of claim 3 when depending on claim 2, wherein the first and second Fresnel elements (29, 31) have respective and varying focal lengths in said vertical and horizontal span of viewing angles.

5. The projection television of any of claims 1 to 4, wherein the color shift of said screen is less than or equal to approximately 2 for all said angles of incidence.

6. The projection television of any of claims 1 to 5, wherein:

the color shift of said screen is less than or equal to approximately 2 for all said angles of incidence in a first subrange of angles of incidence greater than 0° and less than or equal to approximately ±10°; and,
the color shift of said screen is less than or equal to approximately 5 for all said angles of incidence in a second subrange of angles of incidence greater than approximately ±10° and less than or equal to approximately ±30°.

7. The projection television of any of claims 1 to 6, further comprising a mirror (20) between said image projectors and said screen.

8. The projection television of claim 1 to 6, in which said three-dimensional hologram (26) has the following performance specifications:

Horizontal half viewing angle: 38° ± 3°
Vertical half viewing angle: 10° ± 1°
Screen gain: ≥ 8
Color shift: ≤ 3

**Patentansprüche**

1. Projektionsfernsehgerät mit:

mehreren Bildprojektoren (14, 16, 18) für jeweilige Bilder in den Farben Grün, Rot und Blau, einem Projektionsschirm (22) aus einem ersten und einem zweiten gestapelten dreidimensionalen Hologramm (26) auf einem Substrat (24) auf wenigstens einer lichtdurchlässigen Platte (38), wobei der Schirm auf einer ersten Seite Bilder von den Projektoren empfängt und die Bilder auf einer zweiten Seite mit einer gesteuerten Lichtdispersion aller wiedergegebenen Bilder darstellt,

wobei die beiden gestapelten Hologramme eine lineare Änderung in den Lichtdurchlässigkeitseigenschaften über einen Bereich von Betrachtungswinkeln aufweisen und das erste eine vorbestimmte Änderung über einen Vertikalbereich und das zweite eine vorbestimmte Änderung über einen Horizontalbereich bewirkt,
wobei wenigstens einer der Projektoren (14, 16, 18) entlang eines optischen Weges ausgerichtet ist, der mit einem Weg senkrecht zu dem Schirm konvergiert und wenigstens einen Einfallwinkel (α) bildet,
wobei der Schirm eine Interferenzanordnung mit optischen Eigenschaften bildet, die sich horizontal und vertikal über ein Betrachtungsfeld ändern, und der Schirm eine Farbabweichung (C) kleiner als oder gleich ungefähr 5 für alle Einfallwinkel (α) in einem Bereich größer als 0° und kleiner als 22° oder gleich ungefähr 30° aufweist, wie ermittelt durch den Maximalwert, der aus wenigstens einer der folgenden Gleichungen gewonnen wird:

$$C(\Theta) = 20 \cdot \log_{10}(\frac{red(\Theta)}{blue(\Theta)})$$

$$C(\Theta) = 20 \cdot \log_{10}(\frac{green(\Theta)}{blue(\Theta)}),$$

wobei Θ ein beliebiger Winkel innerhalb eines Bereichs (± β) von horizontalen Betrachtungswinkeln, C (Θ) die Farbabweichung bei dem Winkel Θ, red (Θ) der rote Helligkeitswert bei dem Winkel Θ, blue (Θ) der blaue Helligkeitswert bei dem Winkel Θ und green (Θ) der grüne Helligkeitswert bei dem Winkel Θ ist.

**2.** Projektionsschirm nach Anspruch 1, wobei der Schirm (22) außerdem ein erstes Fresnelelement (29 oder 31) enthält, das dem ersten Hologramm überlagert ist, und das erste Fresnelelement eine Wirkung zur Parallelausrichtung in wenigstens einem der Bereiche der Betrachtungswinkel aufweist.

**3.** Projektionsschirm nach Anspruch 2, wobei der Schirm außerdem ein zweites Fresnelelement (29 oder 31) enthält, das auf dem ersten Fresnelelement gestapelt ist, das erste Fresnelelement eine Wirkung zur Parallelausrichtung in einem der Bereiche von Betrachtungswinkeln und das zweite Fresnelelement eine Wirkung zur Parallelausrichtung in dem anderen Bereich der Betrachtungswinkel aufweist, und die Wirkungen zur Parallelausrichtung des ersten und des zweiten Fresnelelements überlagert werden.

**4.** Projektionsschirm nach Anspruch 3, abhängig vom Anspruch 2, wobei das erste und das zweite Fresnelelement (29, 31) jeweilige sich ändernde Brennweiten in dem vertikalen und dem horizontalen Bereich der Betrachtungswinkel aufweisen.

**5.** Projektionsfernsehgerät nach einem der Ansprüche 1 bis 4, wobei die Farbverschiebung des Schirm kleiner als oder gleich ungefähr 2 für alle Einfallwinkel ist.

**6.** Projektionsfemsehgerät nach einem der Ansprüche 1 bis 5, wobei:

   die Farbabweichung des Schirms kleiner als oder gleich ungefähr 2 für alle Einfallwinkel in einem ersten Unterbereich von Einfallwinkeln größer als 0° und kleiner als oder gleich ungefähr ±10° ist, und
   die Farbabweichung des Schirms kleiner als oder gleich ungefähr 5 für alle Einfallwinkel in einem zweiten Unterbereich von Einfallwinkeln größer als ungefähr ±10° und kleiner als oder gleich ungefähr ±30° ist.

**7.** Projektionsfernsehgerät nach einem der Ansprüche 1 bis 6 mit einem Spiegel (20) zwischen den Bildprojektoren und dem Schirm.

**8.** Projektionsfernsehgerät nach einem der Ansprüche 1 bis 6, in dem das dreidimensionale Hologramm die folgenden Leistungsspezifikationen aufweist:

   Horizontaler Halbetrachtungswinkel: 38° ± 3°
   Vertikaler Halbbetrachtungswinkel: 10° ± 1°
   Schirmverstärkung: ≥ 8

Farbabweichung: ≤ 3.

## Revendications

**1.** Téléviseur à projection, comprenant :

   une pluralité de projecteurs d'images (14, 16, 18) pour des images respectives de couleurs vertes, rouges et bleues ;
   un écran à projection (22) formé par des premier et deuxième hologrammes tridimensionnels empilés (26) disposés sur un substrat (24) superposés sur au moins un panneau de transmission de lumière (38), ledit écran recevant des images desdits projecteurs sur un premier côté et affichant lesdites images sur un deuxième côté avec une dispersion contrôlée de la lumière de toutes lesdites images affichées.
   lesdits deux hologrammes empilés ayant une variation linéaire dans les propriétés de transmission de lumière à travers une fourchette d'angles de vue, le premier fournissant une variation prédéterminée à travers une fourchette verticale et le second fournissant une variation prédéterminée à travers une fourchette horizontale,
   au moins l'un desdits projecteurs (14, 16, 18) étant orienté le long d'un chemin optique convergeant avec un chemin orthogonal par rapport audit écran, définissant au moins un angle d'incidence (α) ;
   ledit écran formant un ensemble d'interférence avec des propriétés optiques variant horizontalement et verticalement à travers un champ de vue, l'écran ayant une variation chromatique (C) inférieure ou égale à environ cinq pour tous lesdits angles d'incidence (α) compris dans une gamme supérieure à 0° et inférieure ou égale à environ 30°, comme déterminé par la valeur maximale obtenue à partir d'au moins l'une des expressions suivantes :

   $$C(\Theta) = 20.\log_{10}(\frac{\text{rouge}(\Theta)}{\text{bleu }(\Theta)})$$

   $$C(\Theta) = 20.\log_{10}(\frac{\text{vert}(\Theta)}{\text{bleu }(\Theta)}),$$

   où Θ est n'importe quel angle compris dans une gamme (±β) d'angles de vue horizontaux, C (Θ) est la variation chromatique à l'angle Θ, rouge (Θ) est le niveau de luminance rouge à l'angle Θ, bleu (Θ) est le niveau de luminance bleue à l'angle Θ et vert (Θ) est le niveau de luminance verte à l'angle Θ.

**2.** L'écran à projection de la revendication 1, où ledit écran (22) se compose en outre d'un premier élément de Fresnel (29 ou 31) superposé sur ledit premier hologramme, ledit premier élément de Fresnel ayant un effet de collimation dans au moins l'une desdites fourchettes d'angles de vue.

3. L'écran à projection de la revendication 2, où ledit écran se compose en outre d'un deuxième élément de Fresnel (29 ou 31) empilé sur ledit premier élément Fresnel, ledit premier élément Fresnel ayant un effet de collimation dans l'une desdites fourchettes d'angles de vue et ledit deuxième élément Fresnel ayant un effet de collimation dans l'autre desdites fourchettes d'angles de vue, lesdits effets de collimation desdits premier et deuxième éléments de Fresnel étant superposés.

4. L'écran à projection de la revendication 3 lorsqu'elle dépend de la revendication 2, où les premier et deuxième éléments de Fresnel (29, 31) ont des longueurs focales variables respectivement dans ladite fourchette horizontale et dans ladite fourchette verticale d'angles de vue.

5. Le téléviseur à projection selon n'importe laquelle des revendications 1 à 4, où la variation chromatique dudit écran est inférieure ou égale à environ 2 pour tous lesdits angles d'incidence.

6. Le téléviseur à projection selon n'importe laquelle des revendications 1 à 5, où la variation chromatique dudit écran est inférieure ou égale à environ 2 pour tous lesdits angles d'incidence dans une première sous-plage d'angles d'incidence supérieurs à 0° et inférieurs ou égaux à environ ± 10°; et,

la variation chromatique dudit écran est inférieure ou égale à environ 5 pour tous lesdits angles d'incidence compris dans une deuxième sous-plage d'angles d'incidence supérieurs à environ ± 10° et inférieurs ou égaux à environ ± 30°.

7. Le téléviseur à projection selon n'importe laquelle des revendications 1 à 6, comprenant en outre un miroir (20) entre lesdits projecteurs d'images et ledit écran.

8. Le téléviseur à projection selon les revendications 1 à 6, où ledit hologramme tridimensionnel (26) a les spécifications de performance suivantes :

Demi-angle de vue horizontal : 38° ± 3°
Demi-angle de vue vertical : 10° ± 1°
Gain d'écran : ≥ 8
Variation chromatique : ≤3

FIG. 1

FIG. 2

FIG. 3

FIG. 4

FIG. 5

EP 1 051 857 B1

FIG. 6